# EUROPEAN PATENT SPECIFICATION

(11) **EP 0 617 995 B1**
(45) Date of publication and mention of the grant of the patent: **30.10.1996**
(21) Application number: 94103247.6
(22) Date of filing: 04.03.1994
(51) Int. Cl.: B01D 53/04, D06F 43/08

(54) **Activated-carbon solvent treatment unit for dry-cleaning machines with increased absorption**
Aktivkohle-einrichtung für Lösungsmittelbehandlung bei Maschinen für die Trockenreinigung
Installation pour le traitement au carbon actif d'un solvant avec absorption améliorée pour machines de nettoyage à sec

(30) Priority: 30.03.1993 IT BO930130
(43) Date of publication of application: 05.10.1994
(73) Proprietor: SODIBO S.p.A., I-40128 Bologna (IT)
(72) Inventor: Arbizzani, Tommaso, I-40044 Pontecchio Marconi, Bologna (IT); Ghelardini, Gualtiero, I-40044 Pontecchio Marconi, Bologna (IT)
(74) Representative: Modiano, Guido, Dr.-Ing.

(56) References cited:
- WO-A-88/01534
- DE-A- 3 139 781
- DE-A- 3 319 664
- DE-A- 3 810 646
- US-A- 4 039 306

## Description

The present invention relates to an activated-carbon solvent treatment unit for dry-cleaning machines with increased absorption.

In the past, at the end of the dry-cleaning cycle the door of the drum was opened and the garments were removed while they still contained considerable traces of solvent, most of which dispersed spontaneously in the environment; later, in order to work more effectively and to eliminate residual solvent traces from the cleaned garments, the so-called deodorization cycle has been devised: in practice, the washing drum is flushed by a stream of warm air which removes even small traces of solvent and moisture from the garments.

Until recently, this stream used to be discharged outside either directly or through an activated-carbon filter in order to recover part of the solvent present in the expelled air.

Now, instead, due to more restrictive pollution-control rules, a stream of air containing solvent can be discharged outside only if it complies with maximum concentration values determined on the basis of the flow-rate of the air stream.

Known activated-carbon filters have some drawbacks related to the fact that often the shape, dimensions and orientation of the filter are not such as to produce effective air treatment: in addition to this, the activated carbon often works in non-optimum conditions, in that the temperature of the gaseous mixture conveyed onto the carbon is too high to allow the carbon to fully use its absorption ability, and this prevents the extraction of all the solvent that should be removed: one should bear in mind that the amounts of solvent that the statutory provisions of various countries allow to disperse into the environment, are constantly becoming smaller.

Also known from DE-A-3 139 781 is a solvent treatment unit with vacuum regeneration

The aim of the present invention is to obviate the above described drawbacks of known devices, i.e. to provide an activated-carbon solvent treatment unit for dry-cleaning machines with increased absorption which produces very high solvent absorption.

Within the scope of this aim, another object of the present invention is to achieve the above aim with a structure which is simple, relatively easy to produce in practice, safe in use and effective in operation, as well as relatively modest in cost.

This aim and these objects are all achieved by the present activated-carbon solvent treatment unit of claim 1.

Further characteristics and advantages of the treatment unit according to the present invention will become apparent and evident from the following detailed description of a preferred but not exclusive embodiment thereof, illustrated only by way of non-limitative example in the accompanying drawings, wherein:
figure 1 is a schematic side view of an activated-carbon solvent treatment unit for dry-cleaning machines with increased absorption according to the invention, during absorption;
figure 2 is a schematic side view of the treatment unit of figure 1, during regeneration.

With particular reference to the above figures, the reference numeral 1 generally designates an activated-carbon solvent treatment unit for dry-cleaning machines with increased absorption according to the invention.

The treatment unit 1 comprises a cylindrical container 2 with a vertical axis that extends vertically and can have indifferently a circular, square, rectangular or polygonal cross-section, with a height that, in the case of a circular cross-section, is substantially twice the base diameter.

The upper and lower edges of the container have respective outward folds 3a, 3b for fixing, by means of bolts, the outwardly folded edge 4 of a convex hood 5, or the upper outwardly folded edge 6 of a tubular spacer element 7: the element 7 is provided, in a downward region, with an outwardly folded edge 8 for fixing, by means of bolts, the outwardly folded edge 9 of a convex base 10.

The hood 5 is centrally connected to a tube 11 in which a fan 12 for aspirating the treated air operates; after treatment, this air is returned into the drum. The base 5 is instead centrally connected to a tube 13 for introducing the solvent-containing air arriving from the drum.

Two internal filtering diaphragms 14 and 15 are fixed at the edges 3b and 3a of the container 2; an absorption region is formed between said two diaphragms and is filled with activated-carbon granules with appropriate size characteristics. A cooling heat exchanger 16 is installed in the region affected by the tubular spacer element 7 and is suitable to lower the temperature of the warm air arriving from the drum to make the activated carbon absorb the solvent at the temperature at which the carbon is most effective (approximately at 20 degrees Celsius).

A steam supply duct 17 is connected to the hood 5 and is controlled by a cutoff valve 18, whereas a duct 19 for removing steam and solvent is connected to the base 10 for the activated-carbon regeneration step; advantageously, the removal duct 19 is connected to a condenser which is in turn connected to a water-solvent separator.

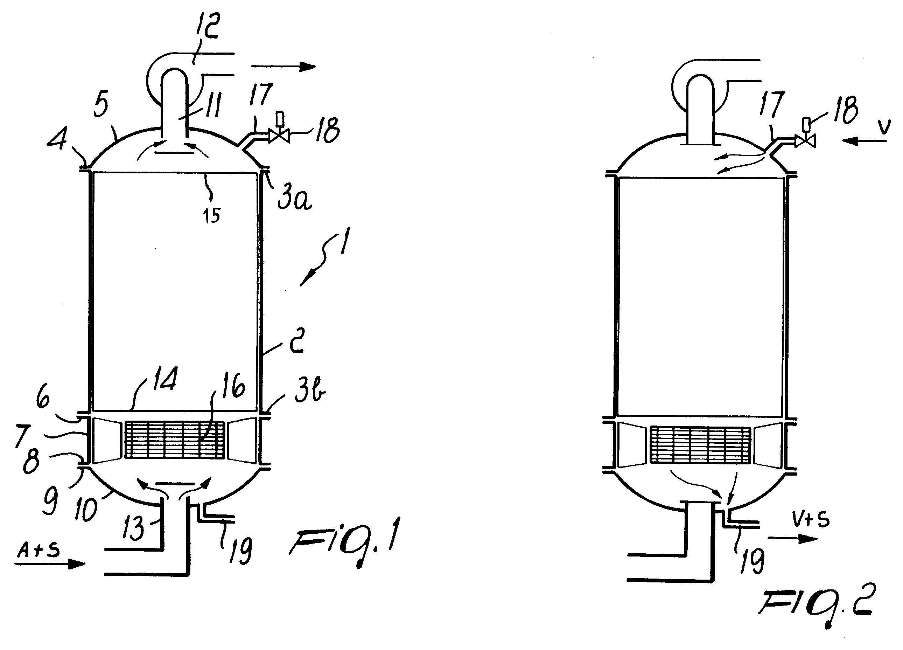

Figure 1 schematically illustrates the absorption cycle, and the arrow A+S indicates the air-solvent mixture arriving from the washing drum; the arrow A designates the treated air: during this step, the exchanger 16 behaves as a regulator for the temperature of the mixture A+S entering the activated carbon.

Figure 2 instead schematically illustrates the regeneration cycle, and the arrow V designates the superheated steam for extracting the solvent in countercurrent from the activated carbon; the arrow V+S designates the steam which contains the solvent, which at the exit from the container is sent to the separator to extract the solvent from the water: during this step, the exchanger 16 behaves like the condenser of known recovery units and produces the condensation of the liquids which are present and are subsequently sent to a separator.

The shape and dimensions of the container 2, together with the cooling of the airflow arriving from the drum prior to absorption, allow the activated-carbon filter to work in ideal conditions: regeneration of the activated carbon by flushing with steam in countercurrent and cooling of the steam at the exit allow to extract from the activated carbon, and thus to separate from the water, most of the solvent which is present.

It has thus been observed that the invention achieves the intended aim and objects.

The invention thus conceived is susceptible to numerous modifications and variations, all of which are within the scope of the appended claims.

All the details may furthermore be replaced with other technically equivalent ones.

In practice, the materials employed, as well as the shapes and dimensions, may be any according to the requirements without thereby abandoning the protective scope of the following claims.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Activated-carbon solvent treatment unit (1) for dry-cleaning machines with increased absorption, comprising a cylindrical container (2) that extends vertically and has a base (10) with a tube (13) for introducing the gaseous air-solvent mixture (A+S) arriving from the drum of a dry-cleaning machine and with a convex hood (5) connected via a tube (11) to an intake fan (12) for the discharge of the treated air (A), a duct (17) connected to a steam supply and a water and solvent removal duct (19) are connected respectively to said hood (5) and to said base (10) of said container (2) for the activated-carbon regeneration step, said container (2) being internally provided with two filtering diaphragms (14,15) between which activated carbon is arranged, a cooling heat exchanger (16) which is arranged below the lower diaphragm (14) and is suitable, during absorption, to lower the temperature of the warm mixture (A+S) arriving from said drum to cause the solvent to be absorbed by the activated carbon at the temperature at which the carbon is most effective, and, during regeneration, to cause the condensation of the steam-solvent mixture to be sent to a water-solvent separator.

2. Treatment unit according to claim 1, characterized in that said heat exchanger (16) is suitable to bring the air-solvent mixture (A+S) arriving from the drum to a temperature at the order of 20 degrees Celsius.

## Patentansprüche

1. Aktivkohle-Lösungsmitteleinheit (1) für Trockenreinigungsmaschinen mit erhöhter Absorption, mit einem zylindrischen Behälter (2), der sich in Vertikalrichtung erstreckt und eine Basis (10) mit einem Rohr (13) zum Einführen der von der Trommel einer Trockenreinigungsmaschine herkommenden, gasförmigen Luft/Lösungsmittelmischung (A+S) aufweist, und eine konvexe Haube (5), die über ein Rohr (11) an ein Einlaßgebläse (12) für den Ausstoß der behandelten Luft (A) angeschlossen ist, mit einer an eine Dampfversorgung angeschlossenen Leitung (17) und einer Wasser- und Lösungsmittelentfernungsleitung (19), welche an die Haube (5) bzw. an die Basis (10) des Behälters (2) für den Aktivkohle-Regenerationsschritt angeschlossen sind, wobei der Behälter (2) innen zwei Filtermembranen (14, 15) aufweist, zwischen denen Aktivkohle angeordnet ist, einen Kühl-Wärmetauscher (16), der unterhalb der unteren Membran (14) vorgesehen ist und, während der Absorption, dazu geeignet ist, die Temperatur der Wärmemischung (A+S) zu verringern, die von der Trommel herkommt, um das Lösungsmittel dazu zu veranlassen, von der Aktivkohle bei jener Temperatur absorbiert zu werden, bei welcher die Kohle am wirksamsten ist, und während der Regeneration die Kondensation der Dampf/Lösungsmittelmischung zu veranlassen, die einer Wasser/Lösungsmitteltrennvorrichtung zugeführt wird.

2. Behandlungseinheit nach Anspruch 1,
dadurch **gekennzeichnet**, daß der Wärmetauscher (16) dazu geeignet ist, die von der Trommel ankommende Luft/Lösungsmittelmischung (A+S) auf eine Temperatur in der Größenordnung von 20 ° C zu bringen.

## Revendications

1. Unité de traitement (1) de solvant par du charbon activé pour des machines de nettoyage à sec, à absorption accrue, comprenant un récipient cylindrique (2) qui s'étend verticalement et qui comporte une base (10) munie d'un tube (13) pour l'introduction d'un mélange gazeux air + solvant (A+S) provenant d'un tambour d'une machine de nettoyage à sec, un capot convexe (5) relié par l'intermédiaire d'un tube (11) à un ventilateur d'aspiration (12) pour l'évacuation de l'air traité (A), une conduite (17) reliée à une alimentation de vapeur (18) et une conduite (19) d'extraction d'eau et de solvant étant respectivement reliées audit capot (5) et à ladite base (10) dudit récipient pour l'étape de régénération du charbon activé, ledit récipient (2) comportant, à l'intérieur, deux diaphragmes de filtration (14, 15) entre lesquels le charbon activé est disposé, un échangeur de chaleur de refroidissement (16) qui est disposé au-dessous du diaphragme inférieur (14) et qui est apte, au cours de l'absorption, d'abaisser la température du mélange chaud (A+S) arrivant dudit tambour pour amener le solvant à être absorbé par le charbon activé à la température à laquelle le charbon est le plus efficace, et, au cours de la régénération, à provoquer la condensation du mélange solvant-vapeur à envoyer à un séparateur eau-solvant.

2. Unité de traitement selon la revendication 1, caractérisée en ce que ledit échangeur de chaleur (16) est apte à porter le mélange air-solvant (A+S) provenant du tambour à une température de l'ordre de 20°C.
